# EUROPEAN PATENT SPECIFICATION

(11) **EP 3 018 969 B1**
(45) Date of publication and mention of the grant of the patent: **01.01.2020**
(21) Application number: 14820386.2
(22) Date of filing: 11.06.2014
(51) Int. Cl.: H04W 8/26, H04W 48/08

(54) **COMMUNICATION TERMINAL, COMMUNICATION METHOD, AND PROGRAM**
KOMMUNIKATIONSENDGERÄT, KOMMUNIKATIONSVERFAHREN UND PROGRAMM
TERMINAL DE COMMUNICATION, PROCÉDÉ DE COMMUNICATION ET PROGRAMME

(30) Priority: 03.07.2013 JP 2013140223
(43) Date of publication of application: 11.05.2016
(73) Proprietor: Panasonic Intellectual Property Management Co., Ltd., Osaka-shi, Osaka 540-6207 (JP)
(72) Inventor: NIMURA, Seiji, Osaka-shi, Osaka 540-6207 (JP); SHINOMIYA, Hirotatsu, Osaka-shi, Osaka 540-6207 (JP); UKITA, Yosuke, Osaka-shi, Osaka 540-6207 (JP); ODA, Tomohiro, Osaka-shi, Osaka 540-6207 (JP); AOKI, Takaaki, Osaka-shi, Osaka 540-6207 (JP)
(74) Representative: Appelt, Christian W.
(86) International application number: PCT/JP2014/003114
(87) International publication number: WO 2015/001724

(56) References cited:
- EP-A2- 1 450 523
- WO-A1-2013/064379
- JP-A- 2009 171 407
- JP-A- 2009 207 050
- JP-A- 2010 057 078
- JP-A- 2010 057 078
- US-A1- 2013 138 757

## Description

### TECHNICAL FIELD

This invention generally relates to communication terminals, communication methods, and programs, and more specifically relates to a communication terminal, a communication method, and a program for establishing wireless communication based on network identification information.

### BACKGROUND ART

Conventionally, communication systems are known in which a coordinator (master) and a plurality of devices (slaves) construct a network, and the coordinator and the plurality of devices perform communication using a wireless packet (refer to JP 2009-88750A, for example).

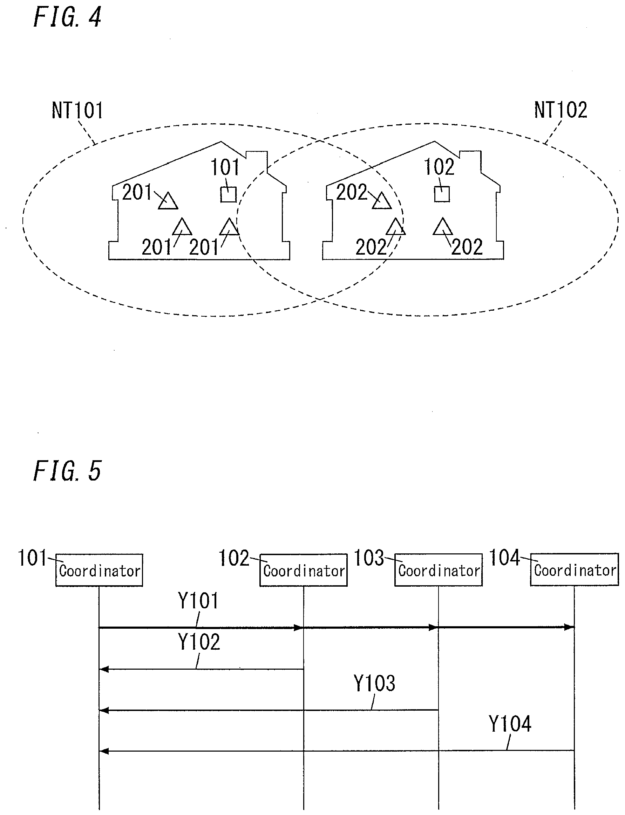

A coordinator and a device identify the network by using a PAN (Personal Area Network)-ID. In an example shown in FIG. 4, a plurality of devices 201 participate in a network NT101 of a coordinator 101, and a plurality of devices 202 participate in a network NT102 of a coordinator 102. In this case, a PAN-ID of the network NT101 is set to the coordinator 101 and the devices 201, and a PAN-ID of the network NT102 is set to the coordinator 102 and the devices 202. The coordinators 101 and 102 and the devices 201 and 202 identify the networks based on these PAN-IDs.

This communication system uses a communication protocol that conforms to IEEE 802.15.4. The coordinators 101 and 102 each have a function of setting the PAN-ID of the network that the coordinator constructs, and this function is realized in a layer that is equal to or upper than a network layer that uses IEEE 802.15.4. The coordinators 101 and 102 each need to set, to the network to which the coordinator belongs, a PAN-ID that is different from PAN-IDs of nearby networks.

Therefore, a function called an active scan, as shown in FIG. 5, is defined in IEEE 802.15.4. The coordinator 101 performs the active scan in order to acquire the PAN-IDs of the nearby networks. The coordinator 101 broadcasts a beacon request Y101. Coordinators 102, 103, and 104 that have received the beacon request Y101 send back beacon signals Y102, Y103, and Y104, respectively. The beacon signal Y102 includes information of the PAN-ID of the coordinator 102, the beacon signal Y103 includes information of the PAN-ID of the coordinator 103, and the beacon signal Y104 includes information of the PAN-ID of the coordinator 104. The coordinator 101 that has received the beacon signals Y102, Y103, and Y104 sets a PAN-ID that is different from the PAN-IDs of the coordinators 102, 103, and 104 to the coordinator 101.

Note that a coordinator may set the PAN-ID at random, or set the PAN-ID based on the serial number of the coordinator without using the active scan.

Also, ZigBee (trademark) is a communication protocol in which a MAC layer operates in conformity to IEEE 802.15.4. In ZigBee, restarting of the coordinator is not taken into consideration, and the coordinator, at every startup, sets the PAN-ID by performing the active scan. When the PAN-ID of the coordinator is changed, the coordinator cannot continue performing communication with a device that it was in communication with before. As a result, pairing of the coordinator and the device needs to be performed again.

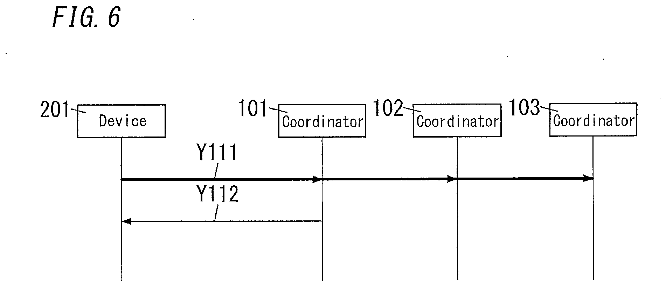

The device, upon determining that communication with the coordinator cannot be performed, searches for the coordinator by performing an orphan scan in IEEE 802.15.4. FIG. 6 shows a case in which the device 201 searches for the coordinator 101 after the device 201 becoming unable to communicate with the coordinator 101. First, the device 201 broadcasts an orphan notification Y111. The coordinators 101, 102, and 103, upon receiving the orphan notification Y111, each determine whether or not the device 201 that transmitted the orphan notification Y111 has participated in the network of the coordinator. Then, only the coordinator 101 that has constituted a network with the device 201 sends back a realignment command Y112 to the device 201. The realignment command Y112 includes information of the PAN-ID of the coordinator 101. The device 201, upon receiving the realignment command Y112, sets the PAN-ID of the coordinator 101 to the device.

In the case where restarting of the coordinator is not taken into consideration as in the case of ZigBee (trademark) described above, a PAN-ID that is set at a current startup is likely to be different from a PAN-ID that was set at a previous startup. Thus, a coordinator needs to perform re-pairing with a device.

Also, although the function of the orphan scan for searching for a coordinator when a device determines that communication with the coordinator cannot be confirmed is defined in IEEE 802.15.4, "time required to determine that communication cannot be confirmed" and "time required for re-search" are necessary. Therefore, communication between a coordinator and a device cannot be performed for a relatively long time.

In another method, the coordinator may store the PAN-ID of the coordinator in a nonvolatile memory when powered off, and read out and set the stored PAN-ID at startup of the coordinator.

However, in a configuration in which the coordinator stores the PAN-ID of the coordinator in a nonvolatile memory, in the case where a PAN-ID is set in a nearby network while the coordinator is powered off, the PAN-IDs of neighboring networks may possibly coincide.

That is to say, it is difficult for the conventional coordinator, at startup, to continue to communicate with a device that participated in the same network. Also, the conventional coordinator, at startup, may set a PAN-ID that coincides with a PAN-ID of a nearby network.

US 2013/0138757 A1 describes a substitution/addition method of components in a home automation wireless system, for example for sliding or hinged doors or garage doors, shutters, blinds, curtains or blinds in general. The system is equipped with a Master component and at least one Slave component that are configured as a network using the Master/Slave technique and communicate according to a wireless communication protocol in which-the at least one Slave and/or Master component stores an identifier data that is used in the protocol as identifier of the Master component and/or of the network, and-the at least one Slave component transmits said identifier data to a component not belonging to the network so that the latter can receive and store it.

### SUMMARY OF INVENTION

An object of an aspect of the present invention is to provide a communication terminal, a communication method, and a program that enables, at startup of the communication terminal, continuous communication with a device that participates in the same network, and suppresses occurrence of a situation in which network identification information that is set at startup coincides with that of the nearby network.

The invention relates to a communication terminal according to independent claim 1, to a communication method according to independent claim 4, and to a program according to independent claim 5. A communication terminal according to an aspect of the present invention serves as a coordinator configured to perform wireless communication with a plurality of peripheral terminals including a device. The communication terminal includes:
a nonvolatile storage configured to store network identification information for identifying a network and device information indicative of a device that has participated in the network; and
a communication controller configured to control wireless communication performed with the plurality of peripheral terminals,
the communication controller being configured to, at startup of the communication terminal,
determine whether or not the device information is stored in the storage,
in a case where the device information is not stored in the storage,
   transmit an identification information acquisition request,
   receive network identification information of a different coordinator that is sent back from the different coordinator that has received the identification information acquisition request, and
   write network identification information that is different from the received network identification information of the different coordinator into the storage, and
   establish wireless communication based on the network identification information written into the storage, and
in a case where the device information is stored in the storage, establish wireless communication based on the network identification information stored in the storage.

A communication method according to an aspect of the present invention is used in a communication terminal that serves as a coordinator configured to perform wireless communication with a plurality of peripheral terminals including a device and includes a nonvolatile storage configured to store network identification information for identifying a network and device information indicative of a device that has participated in the network. The communication method includes:
allowing the storage to store the device information that is information of the device that has participated in the network, at startup of the communication terminal,
determining whether or not the device information is stored in the storage,
in a case where the device information is not stored in the storage,
   transmitting an identification information acquisition request,
   receiving network identification information of a different coordinator that is sent back from the different coordinator that has received the identification information acquisition request,
   writing network identification information that is different from the received network identification information of the different coordinator into the storage, and
   establishing wireless communication based on the network identification information written into the storage, and
in a case where the device information is stored in the storage, establishing wireless communication based on the network identification information stored in the storage.

A program according to an aspect of the present invention is executed in a computer that controls operation of a communication terminal that serves as a coordinator configured to perform wireless communication with a plurality of peripheral terminals including a device and includes a nonvolatile storage configured to store network identification information for identifying a network and device information indicative of a device that has participated in the network. The program causes the computer to realize:
a function of, allowing a storage stores the device information that is information of the device that has participated in the network,
   at startup of the communication terminal,
a function of, determining whether or not the device information is stored in the storage,
a function of,in a case where the device information is not stored in the storage,
   transmitting an identification information acquisition request,
   receiving network identification information of a different coordinator that is sent back from the different coordinator that has received the identification information acquisition request,
   writing network identification information that is different from the received network identification information of the different coordinator into the storage, and
   establishing wireless communication based on the network identification information written into the storage, and
a function of, determine whether or not the device information is stored in the storage, in a case where the device information is stored in the storage, establishing wireless communication based on the network identification information stored in the storage.

Note that an aspect of the present invention is not limited to a program, and may be a computer-readable storage medium to which the program is recorded.

### BRIEF DESCRIPTION OF DRAWINGS

FIG. 1 is a block diagram illustrating a configuration of a communication system of an embodiment;
FIG. 2 is a communication sequence diagram illustrating operations of an active scan of the embodiment;
FIG. 3 is a communication sequence diagram illustrating operations of an orphan scan of the embodiment;
FIG. 4 is a block diagram illustrating a configuration of a conventional communication system;
FIG. 5 is a communication sequence diagram illustrating operations of a conventional active scan; and
FIG. 6 is a communication sequence diagram illustrating operations of a conventional orphan scan.

### DESCRIPTION OF EMBODIMENTS

Hereinafter, an embodiment will be described with reference to the drawings.

### Embodiment

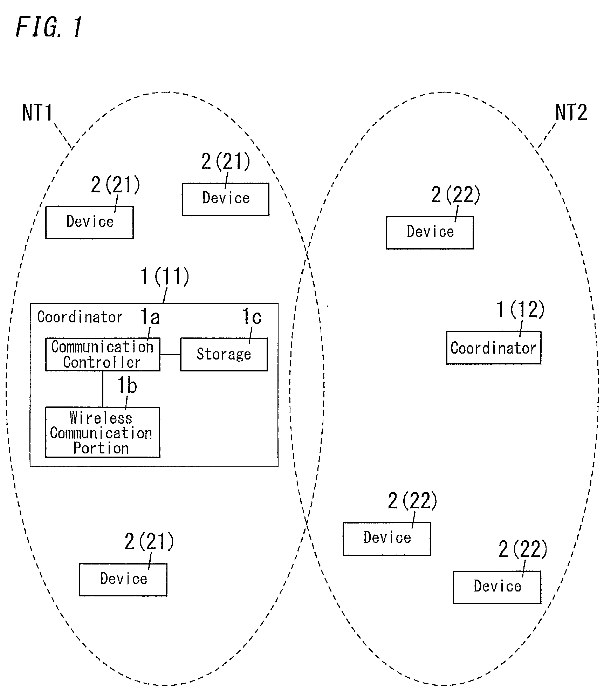

FIG. 1 illustrates a configuration of a communication system of the present embodiment. A coordinator (master) 1 and a plurality of devices (slaves) 2 construct a network, and the coordinator 1 and the devices 2 can communicate using a wireless packet. Note that, in FIG. 1, in order to distinguish elements in different networks, reference signs 11 and 21 are respectively given to the coordinator and the devices in a network NT1, and reference signs 12 and 22 are respectively given to the coordinator and the devices in a network NT2.

The coordinator 1 and the devices 2 identify the network by using a PAN (Personal Area Network) -ID. For example, as shown in FIG. 1, the plurality of devices 21 participate in the network NT1 of the coordinator 11, and the plurality of devices 22 participate in the network NT2 of the coordinator 12. In this case, the PAN-ID of the network NT1 is set to the coordinator 11 and each of the devices 21, and the PAN-ID of the network NT2 is set to the coordinator 12 and each of the devices 22. The coordinators 11 and 12 and the devices 21 and 22 identify the networks based on the PAN-IDs.

The coordinator 1 includes a communication controller 1a, a wireless communication portion 1b, and a storage 1c, as shown in FIG. 1, and corresponds to a communication terminal. The wireless communication portion 1b includes an interface function of performing transmission and reception of a wireless packet. The communication controller 1a is constituted by a microcomputer or the like, and corresponds to a computer that realizes various functions by executing programs. The communication controller 1a controls operations of the wireless communication portion 1b, and controls wireless communication that is performed with a peripheral terminal (coordinator 1, device 2). The storage 1c is constituted by a nonvolatile memory, and stores the PAN-ID (network identification information) that is set to the network of the coordinator, device information that is information of the device 2 that has participated in the network of the coordinator, and the like. The device information includes network information relating to the device such as an address, a communication channel, and the PAN-ID of the device 2 that has constructed the network with the coordinator 1. The communication controller 1a distinguishes the network of the coordinator from the other networks using the PAN-ID stored in the storage 1c, and controls wireless communication performed by the wireless communication portion 1b.

Hereinafter, an exemplary case in which the coordinator 11 performs operation of startup after being powered off in FIG. 1 will be described.

The communication controller 1a of the coordinator 11, at startup of the coordinator 11 after a power supply is turned on, determines whether or not the device information is stored in the storage 1c. In a case where device information is not stored in the storage 1c, the communication controller 1a of the coordinator 11 at the startup acquires the PAN-ID of another nearby coordinator 1 by performing an active scan with respect to the other nearby coordinators 1 such as the coordinator 12. Note that the coordinator 11 at the startup performs the active scan in the case where the device information is not stored in the storage 1c even if the PAN-ID of the coordinator is stored in the storage 1c.

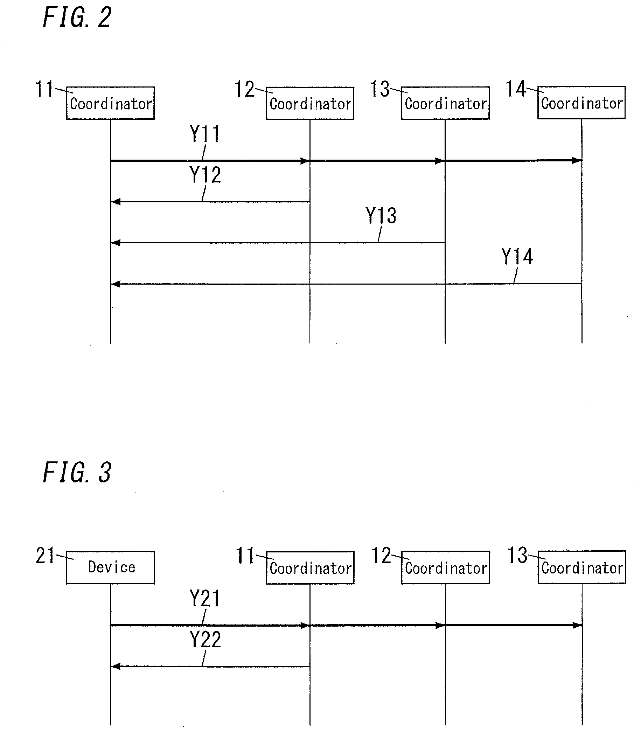

For example, assume that coordinators 12, 13, and 14 exist in the vicinity of the coordinator 11, as shown in FIG. 2. The coordinator 11 at the startup executes the active scan by broadcasting a beacon request Y11. The coordinators 12, 13, and 14 that have received the beacon request Y11 send back beacon signals Y12, Y13, and Y14, respectively. The beacon signal Y12 includes information of the PAN-ID of the coordinator 12, the beacon signal Y13 includes information of the PAN-ID of the coordinator 13, and the beacon signal Y14 includes information of the PAN-ID of the coordinator 14. The coordinator 11 that has received the beacon signals Y12, Y13, and Y14 writes, into the storage 1c, a PAN-ID that is different from the PAN-IDs of the coordinators 12, 13, and 14. Note that the beacon request corresponds to an identification information acquisition request.

That is to say, at the startup of the coordinator 11, in the case where the device information is not stored in the storage 1c, the communication controller 1a of the coordinator 11 transmits the beacon request Y11. Then, the communication controller 1a of the coordinator 11 receives pieces of information of the PAN-IDs that have been sent back from the other coordinators 12, 13, and 14 that have received the beacon request Y11 from among a plurality of peripheral terminals.

The communication controller 1a of the coordinator 11 distinguishes the network of the coordinator from the other networks using the PAN-IDs written into the storage 1c, and controls the wireless communication performed by the wireless communication portion 1b.

The communication controller 1a of the coordinator 11 sends back a beacon signal which includes information of the PAN-ID of the coordinator in response to the beacon request that is broadcasted by a not-network participating device 21 in the vicinity of the coordinator 11. The device 21 sets, to the device, the PAN-ID that is included in the beacon signal received from the coordinator 11. That is, the coordinator 11 and the device 21 that construct the network NT1 can set the same PAN-ID. Also, the PAN-ID that is set in the coordinator 11 and the device 21 is different from the PAN-ID of the other nearby network. Thereafter, the coordinator 11 and the device 21 establish wireless communication based on the set PAN-ID.

As described above, in the case where the device information is not stored in the storage 1c, the coordinator 1 at the startup collects information of the PAN-ID from other nearby coordinators 1, and sets, to the coordinator, a PAN-ID that is different from the PAN-IDs of the other nearby coordinators 1. Accordingly, the coordinator 11 can be, at the startup, prevented from setting, to the coordinator, a PAN-ID that is the same as one of the PAN-IDs of the nearby networks. Also, in the case where the device information is not stored in the storage 1c of the coordinator 1 at the startup, the coordinator 1 can set a new PAN-ID according to a surrounding environment because the coordinator 1 can be considered to have no device 2 with which communication needs to be continued.

Also, in the case where the device information is stored in the storage 1c, the communication controller 1a of the coordinator 11, after startup, establishes wireless communication based on the PAN-ID stored in the storage 1c. For example, assume that device information of each of the devices 21 in the network NT1 is stored in the storage 1c of the coordinator 11 at the startup. In this case, it is considered that the coordinator 11 previously constructed a network with the devices 21, and therefore the coordinator 11 establishes wireless communication based on the PAN-ID stored in the storage 1c in order to continue the communication with the devices 21 after the startup. The PAN-ID stored in the storage 1c of the coordinator 11 is the PAN-ID that was used when the network was constructed with the devices 21.

On the other hand, when determining that communication cannot be performed with the coordinator 11 that is powered off, the device 21 that participated in the network NT1 searches for the coordinator 11 by performing an orphan scan shown in FIG. 3. First, the device 21 broadcasts an orphan notification Y21. Among coordinators 11, 12, and 13 that have received the orphan notification Y21, the coordinators 12 and 13 each discard the orphan notification Y21 because the PAN-ID of the device 21 included in the orphan notification Y21 is different from the PAN-ID of this coordinator. The coordinator 11 at the startup sends back a realignment command Y22 to the device 21 because the PAN-ID of the device 21 included in the orphan notification Y21 is the same as the PAN-ID of the coordinator. Information such as the PAN-ID of the coordinator 11 is included in the realignment command Y22. The device 21 that has received the realignment command Y22 participates in the network NT1 of the coordinator 11 again.

As described above, in the case where the device information is stored in the storage 1c, the coordinator 1, after the startup, establishes wireless communication based on the PAN-ID stored in the storage 1c. Accordingly, the coordinator 11 can continue communication with the device 21 with which the network was constructed after the startup.

Also, in FIG. 1, the communication controller 1a of the coordinator 11 at the startup may perform the active scan in the case where a predetermined time period or more has elapsed from a time when the previous active scan was executed, even if the device information is stored in the storage 1c. Note that the time when the previous active scan was executed is the most recent time when the coordinator 11 transmitted the beacon request.

For example, in FIG. 1, the coordinator 11 constructs the network NT1 with the devices 21, and the coordinator 11 and the devices 21 set the same PAN-ID. Assume that then, while the coordinator 11 is powered off, the nearby coordinator 12 constructs the network NT2 with the devices 22, and the coordinator 12 and the devices 22 sets the same PAN-ID as that of the network NT1. When the coordinator 11 is started again thereafter, the PAN-ID of the network NT1 becomes the same as the PAN-ID of the network NT2.

Therefore, as described above, the coordinator 1 performs the active scan by broadcasting the beacon request, in the case where a predetermined time period or more has elapsed from a time when the previous active scan was executed, even if the device information is stored in the storage 1c. The communication controller 1a of the coordinator 1 collects information of the PAN-ID from other nearby coordinators 1 with the active scan, and writes a PAN-ID that is different from the PAN-IDs of the other nearby coordinators 1 into the storage 1c. Then, the communication controller 1a distinguishes the network of the coordinator from the other networks using the PAN-ID written into the storage 1c, and controls wireless communication performed by the wireless communication portion 1b. That is, the coordinator 1 collects information of the PAN-IDs from other nearby coordinators 1, and can set, to the coordinator, a PAN-ID that is different from the PAN-IDs of the other nearby coordinators 1.

Also, the communication controller 1a of the coordinator 1 measures communication traffic of the wireless communication that is performed between the nearby peripheral terminals based on the reception state of a wireless packet. The measured communication traffic is the communication traffic of the wireless communication that is performed by the other nearby coordinators 1 and devices 2. In FIG. 1, the communication controller 1a of the coordinator 11 at the startup may perform the active scan by broadcasting the beacon request when the communication traffic is at a predetermined level or more even in the case where the device information is stored in the storage 1c. In this case also, the communication controller 1a of the coordinator 1 collects information of the PAN-IDs from other nearby coordinators 1 with the active scan, and writes a PAN-ID that is different from the PAN-IDs of the other nearby coordinators 1 into the storage 1c. Then, the communication controller 1a distinguishes the network of the coordinator from the other networks using the PAN-ID written into the storage 1c, and controls the wireless communication performed by the wireless communication portion 1b.

A method in which an ED scan defined in IEEE 802.15.4 can be used as a method for measuring the communication traffic by the communication controller 1a. In the ED scan, the number of times that a received signal strength indication exceeds a threshold is counted, and the communication controller 1a can determine that the communication traffic becomes higher as the number of times that the received signal strength indication exceeds the threshold increases. Also, the communication controller 1a may count the number of times carrier sense was performed in a single packet transmission processing, and determine that the communication traffic becomes higher as the number of times of the carrier sense increases.

For example, assume that a coordinator 1 is installed at a site after the PAN-ID has been set at the time of shipment. In this case, the surrounding environment at the time of shipment when the PAN-ID was set to the coordinator 1 is different from the surrounding environment of the site at which the coordinator 1 is actually installed. Generally, the number of networks that exist in a surrounding environment is larger and the communication traffic is higher in the surrounding environment at the site than those in the surrounding environment at the time of shipment. Therefore, the coordinator 1 performs the active scan when the communication traffic is at a predetermined level or more even in the case where the device information is stored.

Accordingly, in the case where the coordinator 1 is installed in a site whose surrounding environment is different from the surrounding environment in which the PAN-ID was set, the coordinator 1 collects information of the PAN-IDs of other nearby coordinators 1, and can set a PAN-ID that is different from the PAN-IDs of the other nearby coordinators 1 to the coordinator.

The coordinator 1 as described above is a communication terminal that serves as a coordinator that performs wireless communication with a plurality of peripheral terminals including the device 2. The communication terminal (first coordinator) of the present embodiment includes a nonvolatile storage 1c configured to store network identification information (PAN-ID) for identifying a network and device information indicative of the device 2 that has participated in the network. Furthermore, the communication terminal includes the communication controller 1a configured to control wireless communication performed with a plurality of peripheral terminals. In a case where device information is not stored in the storage 1c at startup of the coordinator 1, the communication controller 1a transmits an identification information acquisition request (beacon request Y11), receives network identification information of a different coordinator 1 (second coordinator) that is sent back from the different coordinator 1 that has received the identification information acquisition request, and writes network identification information that is different from the received network identification information of the different coordinator 1 into the storage 1c. Then the communication controller 1a establishes wireless communication based on the network identification information written into the storage 1c. Also, in a case where the device information is stored in the storage 1c at startup of the coordinator 1, the communication controller 1a establishes wireless communication based on the network identification information stored in the storage 1c.

Also, the communication method of the present embodiment is a communication method of a communication terminal that constitutes a coordinator 1 that performs wireless communication with a plurality of peripheral terminals including a device 2. The coordinator 1 (first coordinator) includes a nonvolatile storage 1c that is configured to store network identification information (PAN-ID) for identifying a network and device information indicative of a device 2 that has participated in the network. In a case where device information is not stored in the storage 1c at startup of the coordinator 1, the coordinator 1 transmits an identification information acquisition request (beacon request Y11), receives network identification information of a different coordinator 1 (second coordinator) that is sent back from the different coordinator 1 that has received the identification information acquisition request, and writes network identification information that is different from the received network identification information of the different coordinator 1 into the storage 1c. Then, the coordinator 1 establishes wireless communication based on the network identification information written into the storage 1c. Also, in a case where the device information is stored in the storage 1c at startup of the coordinator 1, the coordinator 1 establishes wireless communication based on the network identification information stored in the storage 1c.

Also, the program of the present embodiment is a program that is executed in a computer (communication controller la) that controls operations of a communication terminal that serves as a coordinator 1 that performs wireless communication with a plurality of peripheral terminals including a device 2. The coordinator 1 (first coordinator) includes a nonvolatile storage 1c configured to store network identification information (PAN-ID) for identifying a network and device information indicative of a device 2 that has participated in the network.

In a case where the device information is not stored in the storage 1c at startup of the coordinator 1, the program causes the computer to realize a function of transmitting an identification information acquisition request (beacon request Y11). Furthermore, the program causes the computer to realize a function of receiving network identification information of a different coordinator 1 (second coordinator) that is sent back from the different coordinator 1 that has received the identification information acquisition request. The program causes the computer to realize a function of writing network identification information that is different from the received network identification information of the different coordinator 1 into the storage 1c. Then the program causes the computer to realize a function of establishing wireless communication based on the network identification information that is written into the storage 1c. Also, in a case where the device information is stored in the storage 1c at startup of the coordinator 1, the program causes the computer to realize a function of establishing wireless communication based on the network identification information stored in the storage 1c.

Accordingly, the coordinator 1 (communication terminal) of the present embodiment, when being powered off and started again, can continue the communication with a device that is participating in the same network. Furthermore, there is an effect of suppressing the occurrence of a situation in which network identification information that is set by the communication terminal coincides with that of the nearby network when the communication terminal is powered off and started again.

Also, it is preferable that the program of the present embodiment is recorded in a computer-readable recording medium. Examples of the computer-readable recording medium include an optical disk, a semiconductor memory, a magnetic disk, and the like, but the structure and the type of the recording medium is not specifically limited.

Preferably, the communication controller 1a is configured to, at startup of the coordinator 1, in a case where a predetermined time period or more has elapsed from a time when the identification information acquisition request was transmitted last time, transmit the identification information acquisition request even if the device information is stored in the storage 1c. Preferably, the communication controller 1a receives network identification information of a different coordinator 1 (third coordinator) that is sent back from the different coordinator 1 that has received the identification information acquisition request, and writes network identification information that is different from the received network identification information of the different coordinator 1 into the storage 1c.

Preferably, the communication controller 1a is configured to measure communication traffic amount of wireless communication, and, at startup of the coordinator 1, even if the device information is stored in the storage 1c, in a case where the communication traffic amount is at a threshold or more, transmit the identification information acquisition request. Preferably, the communication controller 1a receives network identification information of a different coordinator 1 (fourth coordinator) that is sent back from the different coordinator 1 that has received the identification information acquisition request. Preferably, the communication controller 1a writes network identification information that is different from the network identification information of the different coordinator 1 in the storage 1c.

Note that the aforementioned second coordinator, third coordinator, and fourth coordinator may be the same communication terminal, or communication terminals that are different from each other. Also, in the above description, although the coordinators are given ordinal numbers "first", "second", "third", and "fourth", the ordinal numbers were given for distinguishing the coordinators and have no specific meaning.

## Claims

1. A communication terminal that serves as a coordinator (1, 11) configured to perform wireless communication with a plurality of peripheral terminals including a device (2, 21), the communication terminal comprising:
a nonvolatile storage (1c) configured to store network identification information for identifying a network (NT1, NT2) and device information indicative of a device that has participated in the network; and
a communication controller (1a) configured to control wireless communication performed with the plurality of peripheral terminals,
the communication controller (1a) being configured to, at startup of the communication terminal,
determine whether or not the device information is stored in the storage (1c),
in a case where the device information is not stored in the storage (1c),
transmit an identification information acquisition request (Y11),
receive network identification information of a different coordinator (12, 13, 14) that is sent back from the different coordinator (12, 13, 14) that has received the identification information acquisition request (Y11), and
write network identification information that is different from the received network identification information of the different coordinator (12, 13, 14) into the storage (1c), and
establish wireless communication based on the network identification information written into the storage (1c), and
in a case where the device information is stored in the storage (1c), establish wireless communication based on the network identification information stored in the storage (1c).

2. The communication terminal according to claim 1, wherein the communication controller (1a) is configured to, at startup of the communication terminal, in the case where the device information is stored in the storage (1c),
transmit an identification information acquisition request (Y11), receive network identification information of a different coordinator (12, 13, 14) that is sent back from the different coordinator (12, 13, 14) that has received the identification information acquisition request (Y11), and write network identification information that is different from the received network identification information of the different coordinator (12, 13, 14) into the storage (1c), in a case where a predetermined time period or more has elapsed from a time when an identification information acquisition request (Y11) was transmitted last time,
otherwise establish the wireless communication based on the network identification information stored in the storage (1c).

3. The communication terminal according to claim 1 or 2,
wherein the communication controller (1a) is configured
to measure communication traffic amount of wireless communication, and
to, at startup of the communication terminal, in the case where the device information is stored in the storage (1c),
if the communication traffic amount is less than a threshold, establish wireless communication based on the network identification information stored in the storage (1c),
if the communication traffic amount is a threshold or more, transmit an identification information acquisition request (Y11), receive network identification information of a different coordinator (12, 13, 14) that is sent back from the different coordinator (12, 13, 14) that has received the identification information acquisition request (Y11), and write network identification information that is different from the received network identification information of the different coordinator (12, 13, 14) in the storage (lc)e.

4. A communication method used in a communication terminal that serves as a coordinator (1, 11) configured to perform wireless communication with a plurality of peripheral terminals including a device (2, 21) and comprises a nonvolatile storage (1c) configured to store network identification information for identifying a network (NT1, NT2) and device information indicative of a device that has participated in the network, the communication method comprising:
allowing the storage (1c) to store the device information that is information of the device that has participated in the network,
at startup of the communication terminal,
determining whether or not the device information is stored in the storage (1c),
in a case where the device information is not stored in the storage (1c),
transmitting an identification information acquisition request (Y11),
receiving network identification information of a different coordinator (12, 13, 14) that is sent back from the different coordinator (12, 13, 14) that has received the identification information acquisition request (Y11),
writing network identification information that is different from the received network identification information of the different coordinator (12, 13, 14) into the storage (1c), and
establishing wireless communication based on the network identification information written into the storage (1c), and
in a case where the device information is stored in the storage (1c), establishing wireless communication based on the network identification information stored in the storage (1c).

5. A program that is executed in a computer that controls operation of a communication terminal that serves as a coordinator (1, 11) configured to perform wireless communication with a plurality of peripheral terminals including a device (2, 21) and comprises a nonvolatile storage (1c) configured to store network identification information for identifying a network (NT1, NT2) and device information indicative of a device that has participated in the network, the program causing the computer to realize:
a function of, allowing a storage (1c) stores the device information that is information of the device that has participated in the network,
at startup of the communication terminal,
a function of, determining whether or not the device information is stored in the storage (1c),
a function of,in a case where the device information is not stored in the storage (1c),
transmitting an identification information acquisition request (Y11),
receiving network identification information of a different coordinator (12, 13, 14) that is sent back from the different coordinator (12, 13, 14) that has received the identification information acquisition request (Y11),
writing network identification information that is different from the received network identification information of the different coordinator (12, 13, 14) into the storage (1c), and
establishing wireless communication based on the network identification information written into the storage (1c), and
a function of, determine whether or not the device information is stored in the storage (1c), in a case where the device information is stored in the storage (1c), establishing wireless communication based on the network identification information stored in the storage (1c).

## Patentansprüche

1. Kommunikationsendgerät, das als Koordinator (1, 11) dient, der konfiguriert ist, um eine drahtlose Kommunikation mit mehreren peripheren Endgeräten durchzuführen, die eine Vorrichtung (2, 21) enthalten, wobei das Kommunikationsendgerät umfasst:
einen nichtflüchtigen Speicher (1c), der konfiguriert ist, um Netzwerkidentifikationsinformationen zum Identifizieren eines Netzwerks (NT1, NT2) und Vorrichtungsinformationen zu speichern, die eine Vorrichtung anzeigen, die an dem Netzwerk teilgenommen hat; und
eine Kommunikationssteuervorrichtung (1a), die konfiguriert ist, um die drahtlose Kommunikation zu steuern, die mit den mehreren peripheren Endgeräten durchgeführt wird,
wobei die Kommunikationssteuervorrichtung (1a) konfiguriert ist, um beim Hochfahren des Kommunikationsendgerätes
zu bestimmen, ob die Vorrichtungsinformationen in dem Speicher (1c) gespeichert sind oder nicht,
in einem Fall, in dem die Vorrichtungsinformationen nicht in dem Speicher (1c) gespeichert sind,
eine Identifikationsinformations-Aquirierungsanforderung (Y11) zu senden,
Netzwerkidentifikationsinformationen eines anderen Koordinators (12, 13, 14) zu empfangen, die von dem anderen Koordinator (12, 13, 14), der die Identifikationsinformations-Aquirierungsanforderung (Y11) empfangen hat, zurückgesendet sind, und
Netzwerkidentifikationsinformationen, die sich von den empfangenen Netzwerkidentifikationsinformationen des anderen Koordinators (12, 13, 14) unterscheiden, in den Speicher (1c) zu schreiben, und
basierend auf den Netzwerkidentifikationsinformationen, die in den Speicher (1c) geschrieben sind, eine drahtlose Kommunikation aufzubauen, und
in einem Fall, in dem die Vorrichtungsinformationen in dem Speicher (1c) gespeichert sind, basierend auf den Netzwerkidentifikationsinformationen, die in dem Speicher (1c) gespeichert sind, eine drahtlose Kommunikation aufzubauen.

2. Kommunikationsendgerät nach Anspruch 1, wobei die Kommunikationssteuervorrichtung (1a) dazu konfiguriert ist, um beim Hochfahren des Kommunikationsendgerätes in dem Fall, in dem die Vorrichtungsinformationen in dem Speicher (1c) gespeichert sind,
eine Identifikationsinformations-Aquirierungsanforderung (Y11) zu senden, Netzwerkidentifikationsinformationen eines anderen Koordinators (12, 13, 14), die von dem anderen Koordinator (12, 13, 14) zurückgesendet sind, der die Identifikationsinformations-Aquirierungsanforderung (Y11) empfangen hat, zu empfangen und Netzwerkidentifikationsinformationen, die sich von den empfangenen Netzwerkidentifikationsinformationen des anderen Koordinators (12, 13, 14) unterscheiden, in den Speicher (1c) zu schreiben in einem Fall, in dem eine vorbestimmte Zeitspanne oder mehr von einem Zeitpunkt an verstrichen ist, zu dem eine Identifikationsinformations-Aquirierungsanforderung (Y11) letztmalig gesendet wurde, andernfalls die drahtlose Kommunikation basierend auf den Netzwerkidentifikationsinformationen aufzubauen, die in dem Speicher (1c) gespeichert sind.

3. Kommunikationsendgerät nach Anspruch 1 oder 2,
wobei die Kommunikationssteuervorrichtung (1a) konfiguriert ist, um
die Kommunikationsverkehrsmenge der drahtlosen Kommunikation zu messen, und
beim Hochfahren des Kommunikationsendgerätes, - in dem Fall, in dem die Vorrichtungsinformationen in dem Speicher (1c) gespeichert sind,
wenn die Kommunikationsverkehrsmenge kleiner als ein Schwellenwert ist, basierend auf den Netzwerkidentifikationsinformationen, die in dem Speicher (1c) gespeichert sind, eine drahtlose Kommunikation aufzubauen,
wenn die Kommunikationsverkehrsmenge gleich einem Schwellenwert oder größer ist, eine Identifikationsinformations-Aquirierungsanforderung (Y11) zu senden, Netzwerkidentifikationsinformationen eines anderen Koordinators (12, 13, 14), die von dem anderen Koordinator (12, 13, 14) zurückgesendet sind, der die Identifikationsinformations-Aquirierungsanforderung (Y11) empfangen hat, zu empfangen und Netzwerkidentifikationsinformationen, die sich von den empfangenen Netzwerkidentifikationsinformationen des anderen Koordinators (12, 13, 14) unterscheiden, in den Speicher (1c)e zu schreiben.

4. Kommunikationsverfahren, das in einem Kommunikationsendgerät verwendet wird, das als Koordinator (1, 11) dient, der konfiguriert ist, um eine drahtlose Kommunikation mit mehreren peripheren Endgeräten durchzuführen, die eine Vorrichtung (2, 21) enthalten, und einen nichtflüchtigen Speicher (1c) umfasst, der konfiguriert ist, um Netzwerkidentifikationsinformationen zum Identifizieren eines Netzwerks (NT1, NT2) und Vorrichtungsinformationen, die eine Vorrichtung anzeigen, die an dem Netzwerk teilgenommen hat, zu speichern, wobei das Kommunikationsverfahren umfasst:
Erlauben, dass der Speicher (1c) die Vorrichtungsinformationen speichert, die Informationen der Vorrichtung sind, die in dem Netzwerk teilgenommen hat,
beim Hochfahren des Kommunikationsendgerätes,
Bestimmen, ob die Vorrichtungsinformationen in dem Speicher (1c) gespeichert sind oder nicht,
in einem Fall, in dem die Vorrichtungsinformationen nicht in dem Speicher (1c) gespeichert sind,
Senden einer Identifikationsinformations-Aquirierungsanforderung (Y11),
Empfangen von Netzwerkidentifikationsinformationen eines anderen Koordinators (12, 13, 14), die von dem anderen Koordinator (12, 13, 14) zurückgesendet sind, der die Identifikationsinformations-Aquirierungsanforderung (Y11) empfangen hat,
Schreiben von Netzwerkidentifikationsinformationen, die sich von den empfangenen Netzwerkidentifikationsinformationen des anderen Koordinators (12, 13, 14) unterscheiden, in den Speicher (1c), und
Aufbauen einer drahtlosen Kommunikation basierend auf den Netzwerkidentifikationsinformationen, die in den Speicher (1c) geschrieben sind, und
in einem Fall, in dem die Vorrichtungsinformationen in dem Speicher (1c) gespeichert sind, Aufbauen einer drahtlosen Kommunikation basierend auf den Netzwerkidentifikationsinformationen, die in dem Speicher (1c) gespeichert sind.

5. Programm, das auf einem Computer ausgeführt wird, der den Betrieb eines Kommunikationsendgerätes, das als Koordinator (1, 11) konfiguriert ist, steuert, um eine drahtlose Kommunikation mit mehreren peripheren Endgeräten durchzuführen, die eine Vorrichtung (2, 21) enthalten, und das einen nichtflüchtigen Speicher (1c) umfasst, der konfiguriert ist, um Netzwerkidentifikationsinformationen zum Identifizieren eines Netzwerks (NT1, NT2) und Vorrichtungsinformationen, die eine Vorrichtung anzeigen, die an dem Netzwerk teilgenommen hat, zu speichern, wobei das Programm bewirkt, dass der Computer Folgendes ausführt:
eine Funktion zum Erlauben, dass ein Speicher (1c) die Vorrichtungsinformationen, die Informationen über die Vorrichtung sind, die an dem Netzwerk teilgenommen hat, zu speichern,
beim Hochfahren des Kommunikationsendgerätes,
eine Funktion zum Bestimmen, ob die Vorrichtungsinformationen in dem Speicher (1c) gespeichert sind oder nicht,
in einem Fall, in dem die Vorrichtungsinformationen nicht in dem Speicher (1c) gespeichert sind, eine Funktion zum
Senden einer Identifikationsinformations-Aquirierungsanforderung (Y11),
Empfangen von Netzwerkidentifikationsinformationen eines anderen Koordinators (12, 13, 14), die von dem anderen Koordinator (12, 13, 14) zurückgesendet sind, der die Identifikationsinformations-Aquirierungsanforderung (Y11) empfangen hat,
Schreiben von Netzwerkidentifikationsinformationen, die sich von den empfangenen Netzwerkidentifikationsinformationen des anderen Koordinators (12, 13, 14) unterscheiden, in den Speicher (1c), und
Aufbauen einer drahtlosen Kommunikation basierend auf den Netzwerkidentifikationsinformationen, die in den Speicher (1c) geschrieben sind, und
eine Funktion zum Bestimmen, ob die Vorrichtungsinformationen in dem Speicher (1c) gespeichert sind oder nicht, in einem Fall, in dem die Vorrichtungsinformationen in dem Speicher (1c) gespeichert sind, Aufbauen einer drahtlosen Kommunikation basierend auf den Netzwerkidentifikationsinformationen, die in dem Speicher (1c) gespeichert sind.

## Revendications

1. Terminal de communication qui sert de coordinateur (1, 11) configuré de manière à mettre en oeuvre une communication sans fil avec une pluralité de terminaux périphériques incluant un dispositif (2, 21), le terminal de communication comprenant :
une mémoire non volatile (1c) configurée de manière à stocker des informations d'identification de réseau pour identifier un réseau (NT1, NT2) et des informations de dispositif indicatives d'un dispositif ayant participé dans le réseau ; et
un contrôleur de communication (1a) configuré de manière à commander une communication sans fil mise en oeuvre avec la pluralité de terminaux périphériques ;
le contrôleur de communication (1a) étant configuré de manière à, au démarrage du terminal de communication,
déterminer si les informations de dispositif sont stockées ou non dans la mémoire (1c) ;
dans un cas où les informations de dispositif ne sont pas stockées dans la mémoire (1c);
transmettre une demande d'acquisition d'informations d'identification (Y11) ;
recevoir des informations d'identification de réseau d'un coordinateur différent (12, 13, 14) qui sont renvoyées par le coordinateur différent (12, 13, 14) ayant reçu la demande d'acquisition d'informations d'identification (Y11) ; et
écrire des informations d'identification de réseau qui sont différentes des informations d'identification de réseau reçues du coordinateur différent (12, 13, 14) dans la mémoire (1c) ; et
établir une communication sans fil sur la base des informations d'identification de réseau écrites dans la mémoire (1c) ; et
dans un cas où les informations de dispositif sont stockées dans la mémoire (1c), établir une communication sans fil sur la base des informations d'identification de réseau stockées dans la mémoire (1c).

2. Terminal de communication selon la revendication 1, dans lequel le contrôleur de communication (1a) est configuré de manière à, au démarrage du terminal de communication, dans le cas où les informations de dispositif sont stockées dans la mémoire (1c) :
transmettre une demande d'acquisition d'informations d'identification (Y11), recevoir des informations d'identification de réseau d'un coordinateur différent (12, 13, 14) qui sont renvoyées à partir du coordinateur différent (12, 13, 14) ayant reçu la demande d'acquisition d'informations d'identification (Y11), et écrire des informations d'identification de réseau qui sont différentes des informations d'identification de réseau reçues du coordinateur différent (12, 13, 14) dans la mémoire (1c), dans un cas où une période de temps prédéterminée ou plus s'est écoulée depuis un instant où une demande d'acquisition d'informations d'identification (Y11) a été transmise la dernière fois ; et
sinon, établir la communication sans fil sur la base des informations d'identification de réseau stockées dans la mémoire (1c).

3. Terminal de communication selon la revendication 1 ou 2,
dans lequel le contrôleur de communication (1a) est configuré de manière à mesurer une quantité de trafic de communication d'une communication sans fil, et
à, au démarrage du terminal de communication, dans le cas où les informations de dispositif sont stockées dans la mémoire (1c) :
si la quantité de trafic de communication est inférieure à un seuil, établir une communication sans fil sur la base des informations d'identification de réseau stockées dans la mémoire (1c) ;
si la quantité de trafic de communication est supérieure ou égale à un seuil, transmettre une demande d'acquisition d'informations d'identification (Y11), recevoir des informations d'identification de réseau, d'un coordinateur différent (12, 13, 14), qui sont renvoyées à partir du coordinateur différent (12, 13, 14) ayant reçu la demande d'acquisition d'informations d'identification (Y11), et écrire des informations d'identification de réseau qui sont différentes des informations d'identification de réseau reçues du coordinateur différent (12, 13, 14) dans la mémoire (1c).

4. Procédé de communication utilisé dans un terminal de communication qui sert de coordinateur (1, 11) configuré de manière à mettre en oeuvre une communication sans fil avec une pluralité de terminaux périphériques incluant un dispositif (2, 21), et qui comprend une mémoire non volatile (1c) configurée de manière à stocker des informations d'identification de réseau pour identifier un réseau (NT1, NT2) et des informations de dispositif indicatives d'un dispositif ayant participé dans le réseau, le procédé de communication comprenant les étapes ci-dessous consistant à :
autoriser la mémoire (1c) à stocker des informations de dispositif qui sont des informations du dispositif ayant participé dans le réseau,
au démarrage du terminal de communication,
déterminer si les informations de dispositif sont stockées ou non dans la mémoire (1c) ;
dans un cas où les informations de dispositif ne sont pas stockées dans la mémoire (1c);
transmettre une demande d'acquisition d'informations d'identification (Y11) ;
recevoir des informations d'identification de réseau d'un coordinateur différent (12, 13, 14) qui sont renvoyées par le coordinateur différent (12, 13, 14) ayant reçu la demande d'acquisition d'informations d'identification (Y11) ; et
écrire des informations d'identification de réseau qui sont différentes des informations d'identification de réseau reçues du coordinateur différent (12, 13, 14) dans la mémoire (1c) ; et
établir une communication sans fil sur la base des informations d'identification de réseau écrites dans la mémoire (1c) ; et
dans un cas où les informations de dispositif sont stockées dans la mémoire (1c), établir une communication sans fil sur la base des informations d'identification de réseau stockées dans la mémoire (1c).

5. Programme qui est exécuté dans un ordinateur qui commande le fonctionnement d'un terminal de communication qui sert de coordinateur (1, 11) configuré de manière à mettre en oeuvre une communication sans fil avec une pluralité de terminaux périphériques incluant un dispositif (2, 21), et qui comprend une mémoire non volatile (1c) configurée de manière à stocker des informations d'identification de réseau en vue d'identifier un réseau (NT1, NT2), et des informations de dispositif indicatives d'un dispositif ayant participé dans le réseau, le programme amenant l'ordinateur à réaliser :
une fonction consistant à autoriser une mémoire (1c) à stocker des informations de dispositif qui sont des informations du dispositif ayant participé dans le réseau,
au démarrage du terminal de communication,
une fonction consistant à déterminer si les informations de dispositif sont stockées ou non dans la mémoire (1c) ;
une fonction consistant à, dans un cas où les informations de dispositif ne sont pas stockées dans la mémoire (1c) ;
transmettre une demande d'acquisition d'informations d'identification (Y11) ;
recevoir des informations d'identification de réseau d'un coordinateur différent (12, 13, 14) qui sont renvoyées par le coordinateur différent (12, 13, 14) ayant reçu la demande d'acquisition d'informations d'identification (Y11) ;
écrire des informations d'identification de réseau qui sont différentes des informations d'identification de réseau reçues du coordinateur différent (12, 13, 14) dans la mémoire (1c) ; et
établir une communication sans fil sur la base des informations d'identification de réseau écrites dans la mémoire (1c) ; et
une fonction consistant à déterminer si les informations de dispositif sont stockées ou non dans la mémoire (1c), et dans un cas où les informations de dispositif sont stockées dans la mémoire (1c), établir une communication sans fil sur la base des informations d'identification de réseau stockées dans la mémoire (1c).
